(19)

Europäisches
Patentamt

European
Patent Office

Office européen
des brevets

(11) **EP 3 258 582 A1**

(12) **EUROPEAN PATENT APPLICATION**

(43) Date of publication:
**20.12.2017 Bulletin 2017/51**

(51) Int Cl.:
**H02M 1/15** *(2006.01)*   **H02M 3/335** *(2006.01)*
**H02M 1/00** *(2006.01)*

(21) Application number: **16174508.8**

(22) Date of filing: **15.06.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **DET International Holding Limited
Grand Cayman (KY)**

(72) Inventor: **Beinlich, Dominik Reinhard
10280 Tampol Phraksa, Amphur Muang,
Samutprakarn (TH)**

(74) Representative: **2K Patentanwälte Blasberg
Kewitz & Reichel
Partnerschaft mbB
Schumannstrasse 27
60325 Frankfurt am Main (DE)**

(54) **RIPPLE COMPENSATION CIRCUIT OF POWER SUPPLY AND COMPENSATING METHOD THEREOF**

(57)    A compensating method for a ripple compensation circuit (2) of a power supply (1) is provided. The power supply (1) includes an LLC resonant converter (3). The LLC resonant converter (3) receives an input voltage (Vin) and generates an output voltage (Vout). Firstly, the output voltage (Vout) is subtracted from a reference voltage (Vref), so that a first error signal (Ve) is generated. Then, a digital filter (22) is provided to increase a low frequency gain of the first error signal (Ve), so that a second error signal (Ve') is generated. Then, the first error signal (Ve) and the second signal are added, so that a modulated error signal (Vg) is generated. Then, a compensation signal (Sc) is generated to control the LLC resonant converter (3) according to the modulated error signal (Vg). Consequently, a low frequency gain of the input voltage (Vin) is increased and a low frequency ripple of the output voltage (Vout) is suppressed by an increased voltage loop compensator response.

FIG. 2

## Description

## FIELD OF THE INVENTION

The present invention relates to a ripple compensation circuit, and more particularly to a ripple compensation circuit of a power supply and a compensating method thereof.

## BACKGROUND OF THE INVENTION

A power supply is an electronic device that is widely used in daily life. Generally, an electric appliance has a power supply for providing electric power to internal electronic components of the electric appliance. For example, an AC/DC power supply usually comprises a power factor correction (PFC) circuit and an LLC resonant converter (including a combination of two inductors (L) and one capacitor (C)). After an AC voltage (e.g., from a utility power source) is received by the PFC circuit and the power factor of the AC voltage is corrected by the PFC circuit, a transition DC voltage is outputted. The LLC resonant converter is used for resonantly converting the transition DC voltage into an output DC voltage with a desired voltage level.

However, during operation of the AC/DC power supply, the received AC voltage has a low frequency (e.g., the 90~120Hz ripple). Consequently, the transition DC voltage from the PFC circuit and the output DC voltage from the LLC resonant converter also contain low frequency ripples. These low frequency ripples may result in additional power loss, cause abnormal operation of the AC/DC power supply, or even generate noise and undesired sound.

Conventionally, the AC/DC power supply with the LLC resonant converter uses an analog filtering approach for inhibiting the low frequency ripple. That is, an analog filtering circuit such as an RC filtering circuit or an LC filtering circuit is connected to an output terminal of the LLC resonant converter. The analog filtering circuit is used for filtering off the low frequency ripple that is contained in the output DC voltage from the LLC resonant converter. After the resistance, capacitance and/or inductance of associated components of the AC/DC power supply are calculated and specially designed, the analog filtering circuit can effectively inhibit the low frequency ripple to a certain extent. However, the use of the analog filtering circuit increases the fabricating cost of the AC/DC power supply and occupies the layout space of the AC/DC power supply.

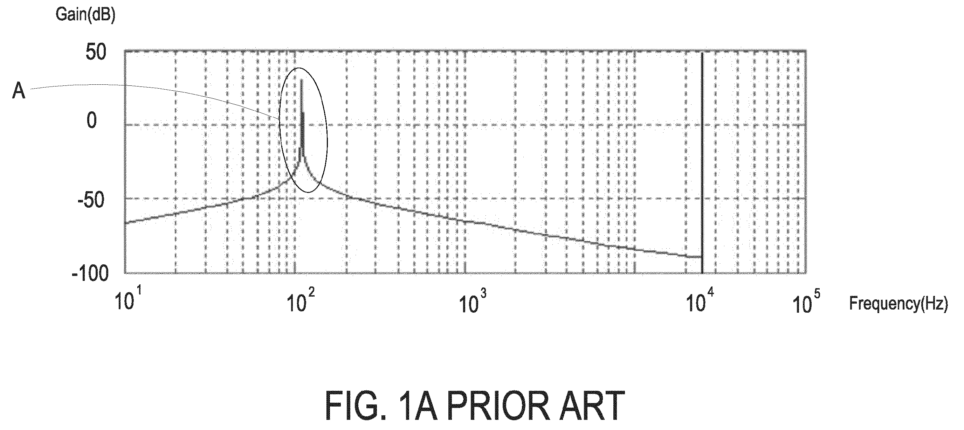

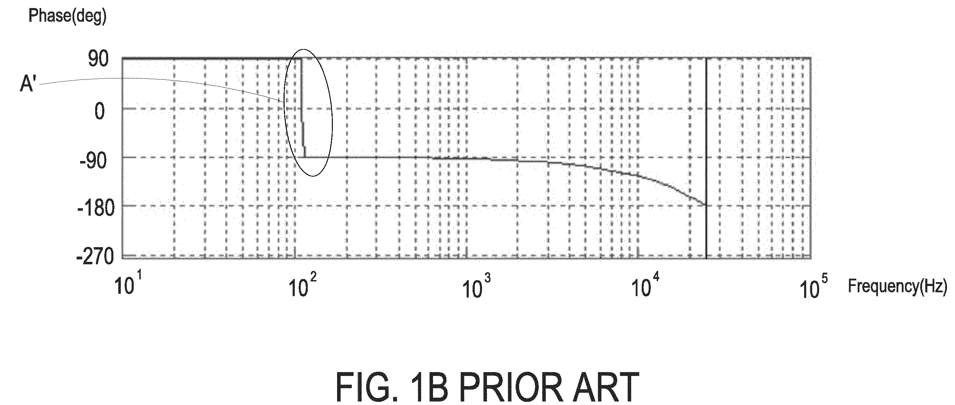

For solving the problem of using the analog filtering circuit, a conventional method is directed to increase the gain value of the LLC input voltage at the low frequency in order to reduce the low frequency ripple of the AC/DC power supply output voltage. In accordance with this method, the LLC output voltage and the gain value of a gain filter are multiplied to generate a gain signal and increase the gain value of the LLC output voltage at the low frequency, and the LLC input voltage is compensated by the gain signal to increase the gain value of the LLC input voltage at the low frequency. FIG. 1A is a plot illustrating the relationship between the gain value of the LLC input voltage and the frequency after compensated by the gain signal. FIG. 1B is a plot illustrating the relationship between the phase of the LLC input voltage and the frequency after compensated by the gain signal. However, since the LLC output voltage and the gain value of a gain filter are multiplied to increase the gain value of the LLC input voltage at the low frequency, the zero and pole locations are changed. If the LLC input voltage is directly compensated by the gain signal with the changed zero and pole locations, a significant phase impact occurs. Please refer to the circumscribed zone A of FIG. 1A. After the LLC input voltage is compensated by the gain signal, the gain value of the LLC input voltage at the frequency of about 100Hz is increased. However, the circumscribed zone A' as shown in FIG. 1B indicates that the increase of the gain value results in a phase impact of about 90 degrees to about -90 degrees. Because of the significant phase impact, the AC/DC power supply is unstable.

## SUMMARY OF THE INVENTION

It is an object of the present invention to provide an enhance ripple compensation circuit of a power supply and a compensating method thereof and a power supply including such a ripple compensation circuit suited in order to at least partially overcome the above drawbacks.

These problems are solved by a ripple compensation circuit as claimed in claim 1, by a compensating method for a ripple compensation circuit as claimed in claim 7 and by a power supply as claimed in claim 11. Further advantageous embodiments are the subject-matter of the dependent claims.

The present invention provides a ripple compensation circuit of a power supply and a compensating method thereof. By the ripple compensation circuit, the low frequency gain of the LLC input voltage is increased, the low frequency ripple is suppressed, and the phase impact is decreased. Consequently, the stability of the power supply can be maintained. Moreover, the use of the ripple compensation circuit can reduce the inner space and the fabricating cost of the power supply.

In accordance with an aspect of the present invention, there is provided a ripple compensation circuit of a power supply. The power supply includes an LLC resonant converter. An input terminal of the LLC resonant converter receives an input voltage. An output terminal of the LLC resonant converter generates an output voltage. The ripple compensation circuit includes a subtracter, a digital filter, an adder, and a voltage loop compensation circuit. An input terminal of the subtracter is connected with the output terminal of the LLC resonant converter. The subtracter receives the output voltage and a reference voltage. After the output voltage is subtracted from the reference voltage, the subtracter outputs a first error signal. An input terminal of the digital filter is connected with an output terminal of the subtracter and receives the first error signal. After the first error signal is processed by the digital filter, a gain of the first error signal at low frequency is increased, so that a second error signal is outputted from the digital filter. An input terminal of the adder is connected with the output terminal of the subtracter and an output terminal of the digital filter. After the first error signal and the second error signal are added, a modulated error signal is outputted from the adder. An input terminal of the voltage loop compensation circuit is connected with an output terminal of the adder. An output terminal of the voltage loop compensation circuit is connected with the LLC resonant converter. The voltage loop compensation circuit generates a compensation signal to control the LLC resonant converter according to the modulated error signal, so that a low frequency gain of the input voltage is increased and a low frequency ripple of the output voltage is suppressed by an increased voltage loop compensator response.

In accordance with a further aspect of the present invention, there is provided a ripple compensation circuit for use in a a power supply, the power supply comprising an LLC resonant converter, an input terminal of the LLC resonant converter receiving an input voltage (Vin), and an output terminal of the LLC resonant converter generating an output voltage (Vout), the ripple compensation circuit comprising:

a subtracter, wherein, when an input terminal of the subtracter is connected with the output terminal of the LLC resonant converter and the subtracter receives the output voltage (Vout) and a reference voltage (Vref), after the output voltage (Vout) is subtracted from the reference voltage (Vref), the subtracter outputs a first error signal (Ve);
a digital filter, wherein, when an input terminal of the digital filter is connected with an output terminal of the subtracter and receives the first error signal, after the first error signal (Ve) is processed by the digital filter, a gain of the first error signal (Ve) at a low frequency is increased, so that a second error signal (Ve') is outputted from the digital filter;
an adder, wherein, when an input terminal of the adder is connected with the output terminal of the adder and an output terminal of the digital filter, after the first error signal (Ve) and the second error signal (Ve') are added, a modulated error signal (Vg) is outputted from the adder; and
a voltage loop compensation circuit, wherein, when an input terminal of the voltage loop compensation circuit is connected with an output terminal of the adder and an output terminal of the voltage loop compensation circuit is connected with the LLC resonant converter, the voltage loop compensation circuit generates a compensation signal (Sc) to control the LLC resonant converter according to the modulated error signal (Vg), so that a low frequency gain of the input voltage (Vin) is increased and a low frequency ripple of the output voltage (Vout) is suppressed by an increased voltage loop compensator response.

In accordance with a further aspect of the present invention, there is provided a compensating method for a ripple compensation circuit of a power supply. The power supply includes an LLC resonant converter. An input terminal of the LLC resonant converter receives an input voltage. An output terminal of the LLC resonant converter generates an output voltage. The compensating method includes the following steps. Firstly, the output voltage is subtracted from a reference voltage, so that a first error signal is generated. Then, a digital filter is provided to increase a gain of the first error signal at low frequency, so that a second error signal is generated. Then, the first error signal and the second signal are added, so that a modulated error signal is generated. Then, a compensation signal is generated to control the LLC resonant converter according to the modulated error signal. Consequently, a low frequency gain of the input voltage is increased and a low frequency ripple of the output voltage is suppressed.

In accordance with a further aspect of the present invention, there is provided a power supply. The power supply includes an LLC resonant converter and a ripple compensation circuit. An input terminal of the LLC resonant converter receives an input voltage. An output terminal of the LLC resonant converter generates an output voltage. The ripple compensation circuit includes a subtracter, a digital filter, an adder, and a voltage loop compensation circuit. An input terminal of the subtracter is connected with the output terminal of the LLC resonant converter. The subtracter receives the output voltage and a reference voltage. After the output voltage is subtracted from the reference voltage, the subtracter outputs a first error signal. An input terminal of the digital filter is connected with an output terminal of the subtracter and receives the first error signal. After the first error signal is processed by the digital filter, a gain of the first error signal at low frequency is increased, so that a second error signal is outputted from the digital filter. An input terminal of the adder is connected with the output terminal of the subtracter and an output terminal of the digital filter. After the first error signal and the second error signal are added, a modulated error signal is outputted from the adder. An input terminal of the voltage loop compensation circuit is connected with an output terminal of the adder. An output terminal of the voltage loop compensation circuit is connected with the LLC resonant converter. The voltage loop compensation circuit generates a compensation signal to control the LLC resonant converter according to the modulated error signal so that a low frequency gain of the input voltage is increased and a low frequency ripple of the output voltage is suppressed by an increased voltage loop compensator response.

The above contents of the present invention will become more readily apparent to those ordinarily skilled in the art after reviewing the following detailed description and accompanying drawings, in which:

**BRIEF DESCRIPTION OF THE DRAWINGS**

FIG. 1A is a plot illustrating the relationship between the gain value of the LLC input voltage and the frequency after compensated by the gain signal;

FIG. 1B is a plot illustrating the relationship between the phase of the LLC input voltage and the frequency after compensated by the gain signal;

FIG. 2 is a schematic functional block diagram illustrating a ripple compensation circuit of a power supply according to an embodiment of the present invention;

FIG. 3 schematically illustrates the architecture of the z-domain transfer function in the digital filter of the ripple compensation circuit of FIG. 2;

FIG. 4 is a flowchart illustrating a compensating method for a ripple compensation circuit of a power supply according to an embodiment of the present invention;

FIG. 5A is a schematic timing waveform diagram illustrating the simulation result of the voltage of the first error signal in the ripple compensation circuit of FIG. 2;

FIG. 5B is a schematic timing waveform diagram illustrating the simulation result of the voltage of the second error signal in the ripple compensation circuit of FIG. 2;

FIG. 5C is a schematic timing waveform diagram illustrating the simulation result of the voltage of the modulated error signal in the ripple compensation circuit of FIG. 2;

FIG. 6A is a schematic timing waveform diagram illustrating the simulation result of the LLC output voltage without using the ripple compensation circuit of the present invention;

FIG. 6B is a schematic timing waveform diagram illustrating the simulation result of the LLC output voltage when using the ripple compensation circuit of the present invention;

FIG. 7A is simulation result about the ripple amplitude spectrum of the LLC output voltage without using the ripple compensation circuit of the present invention;

FIG. 7B is simulation result about the ripple amplitude spectrum of the LLC output voltage when using the ripple compensation circuit of the present invention;

FIG. 8A is a plot illustrating the relationship between the gain value of the LLC input voltage and the frequency after compensated by the ripple compensation circuit of the present invention; and

FIG. 8B is a plot illustrating the relationship between the phase of the LLC input voltage and the frequency after compensated by the ripple compensation circuit of the present invention.

**DETAILED DESCRIPTION OF THE PREFERRED EMBODIMENT**

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

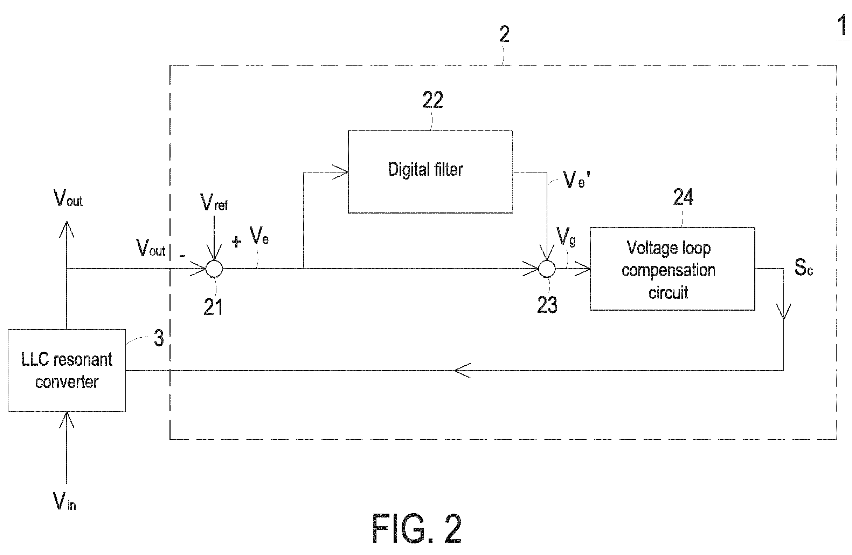

FIG. 2 is a schematic functional block diagram illustrating a ripple compensation circuit of a power supply according to an embodiment of the present invention. The ripple compensation circuit 2 is applied to the power supply 1. An example of the power supply 1 includes but is not limited to an AC/DC power supply. The power supply 1 comprises an LLC resonant converter 3. The LLC resonant converter 3 is used for resonantly converting an input voltage Vin into an output voltage Vout. The output voltage Vout is provided to a load (not shown), which is electrically connected with the power supply 1. For example, the load is an electric appliance.

As shown in FIG. 2, the ripple compensation circuit 2 comprises a subtracter 21, a digital filter 22, an adder 23 and a voltage loop compensation circuit 24. The input terminal of the subtracter 21 is connected with the output terminal of the LLC resonant converter 3. The subtracter 21 receives the output voltage Vout from the LLC resonant converter 3 and a reference voltage Vref. After the output voltage Vout is subtracted from the reference voltage Vref, the subtracter 21 outputs a first error signal Ve.

The input terminal of the digital filter 22 is connected with the output terminal of the subtracter 21. A z-domain transfer function is stored in the digital filter 22. After the first error signal Ve is received by the digital filter 22 and processed by the z-domain transfer function, the gain value of the first error signal Ve at the low frequency is increased. Consequently, a second error signal Ve' is outputted from the digital filter 22. In one embodiment, the gain value at the low frequency is a voltage gain at the frequency of 90Hz~120Hz.

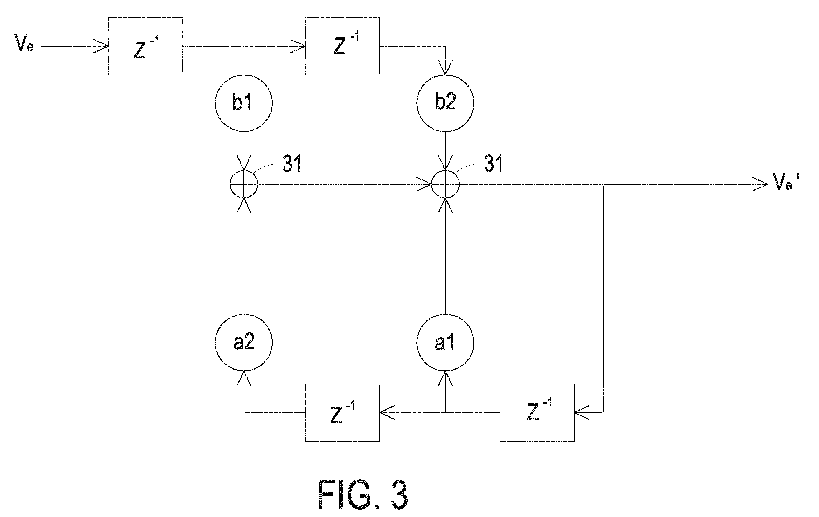

FIG. 3 schematically illustrates the architecture of the z-domain transfer function in the digital filter of the ripple compensation circuit of FIG. 2. An example of the digital filter 22 includes but is not limited to an infinite impulse response (IIR) filter. The z-domain transfer function in the IIR filter may be expressed by the mathematic formula (1):

$$(1) \quad H(z) = \frac{v_e{}'}{v_e} = \frac{b_1 \cdot z^{-1} + b_2 \cdot z^{-2}}{1 + a_1 \cdot z^{-1} + a_2 \cdot z^{-2}}$$

In the mathematic formula (1), H(z) is the z-domain transfer function, Ve is the first error signal, Ve' is the second error signal, a1, a2, b1 and b2 are filter coefficients of the IIR filter, $z^{-1}$ is a first delay element, and $z^{-2}$ is a second delay element that is the result of the multiplication of two first delay elements $z^{-1}$. The mathematic formula (1) can be implemented by using the architecture of FIG. 3. In FIG. 3, the numeral reference 31 denotes the adder. After the first error signal Ve and the second error signal Ve' are processed by the IIR filter according to the filter coefficients a1, a2, b1 and b2, the first delay element $z^{-1}$ and the adder 31, the z-domain transfer function H(z) is obtained. Moreover, the pole location of the filter may be adjusted according to the coefficients a1 and a2, and the zero location of the filter may be adjusted according to the coefficients b1 and b2. Consequently, the filter with different gain values at different frequencies can be designed by adjusting the filter coefficients a1, a2, b1 and b2. For example, by adjusting the filter coefficients of the z-domain transfer function H(z), the voltage gain at the frequency of 90Hz~120Hz is increased. The ways of adjusting the filter coefficients are well known to those skilled in the art, and are not redundantly described herein.

Please refer to FIG. 2 again. The input terminal of the adder 23 is connected with the output terminal of the subtracter 21 and the output terminal of the digital filter 22. The first error signal Ve from the subtracter 21 and the second error signal Ve' from the digital filter 22 are received by the adder 23. After the first error signal Ve and the second error signal Ve' are added, a modulated error signal Vg is outputted from the adder 23.

The input terminal of the voltage loop compensation circuit 24 is connected with the output terminal of the adder 23. The output terminal of the voltage loop compensation circuit 24 is connected with the LLC resonant converter 3. The voltage loop compensation circuit 24 receives the modulated error signal Vg from the adder 23, and generates a compensation signal Sc to control the LLC resonant converter 3 according to the modulated error signal Vg. Due to the compensation signal Sc, the gain value of the input voltage Vin at the low frequency is increased. Since the gain value of the input voltage Vin at the low frequency is increased, the low frequency ripple of the output voltage Vout can be effectively suppressed by an increased voltage loop compensator response.

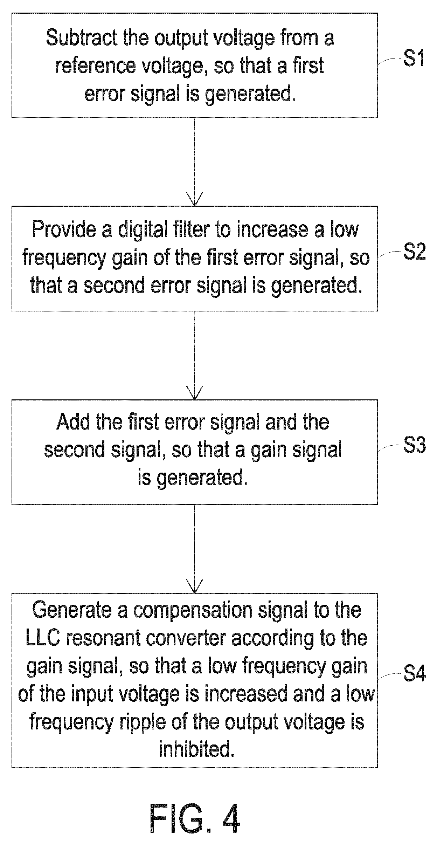

FIG. 4 is a flowchart illustrating a compensating method for a ripple compensation circuit of a power supply according to an embodiment of the present invention. Please refer to FIGS. 2 and 4. The compensating method comprises the following steps. Firstly, in a step S1, the output voltage Vout from the LLC resonant converter 3 and a reference voltage Vref are received. After the output voltage Vout is subtracted from the reference voltage Vref, a first error signal Ve is generated. Then, in a second step S2, the first error signal Ve is received by the digital filter 22 and processed by the z-domain transfer function of the digital filter 22, so that the gain value of the first error signal Ve at the low frequency is increased. Consequently, a second error signal Ve' is outputted from the digital filter 22. In a step S3, the first error signal Ve and the second error signal Ve' are received by the adder 23. After the first error signal Ve and the second error signal Ve' are added, a modulated error signal Vg is outputted from the adder 23. In a step S4, voltage loop compensation circuit 24 receives the modulated error signal Vg from the adder 23, and generates a compensation signal Sc to control the LLC resonant converter 3 according to the modulated error signal Vg. Due to the compensation signal Sc, the gain value of the input voltage Vin at the low frequency is increased. Since the gain value of the input voltage Vin at the low frequency is increased, the low frequency ripple of the output voltage Vout can be effectively suppressed.

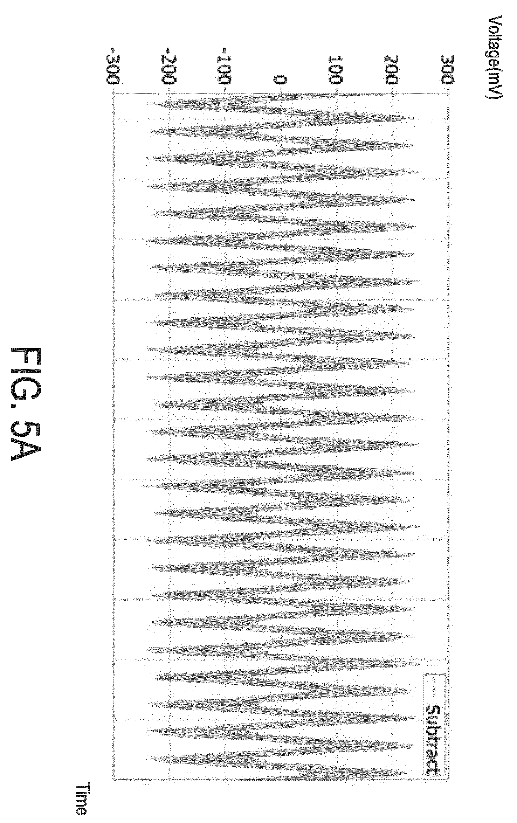

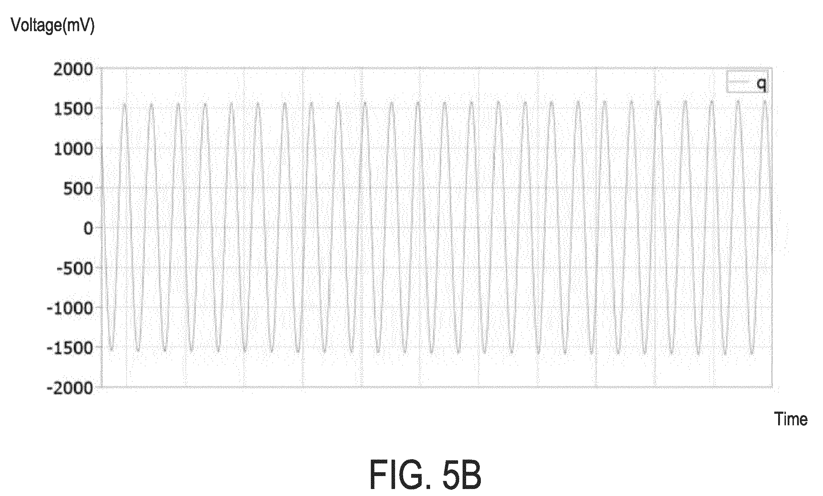

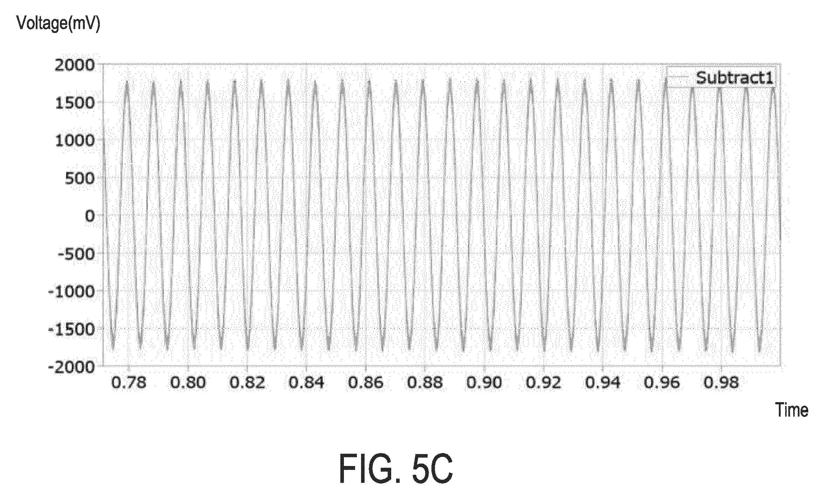

FIG. 5A is a schematic timing waveform diagram illustrating the simulation result of the voltage of the first error signal in the ripple compensation circuit of FIG. 2. FIG. 5B is a schematic timing waveform diagram illustrating the simulation result of the voltage of the second error signal in the ripple compensation circuit of FIG. 2. FIG. 5C is a schematic timing waveform diagram illustrating the simulation result of the voltage of the modulated error signal in the ripple compensation circuit of FIG. 2. By comparing the result of FIG. 5A with the result of FIG. 5B, it is found that the user of the digital filter 22 can increase the gain of the first error signal Ve at low frequency. Consequently, after the first error signal Ve and the second error signal Ve' are added to generate the modulated error signal Vg, the low frequency ripple of the output voltage Vout can be effectively suppressed.

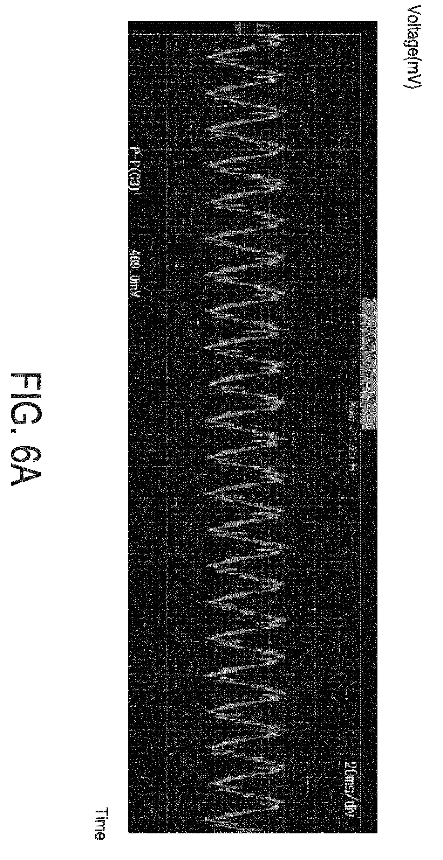

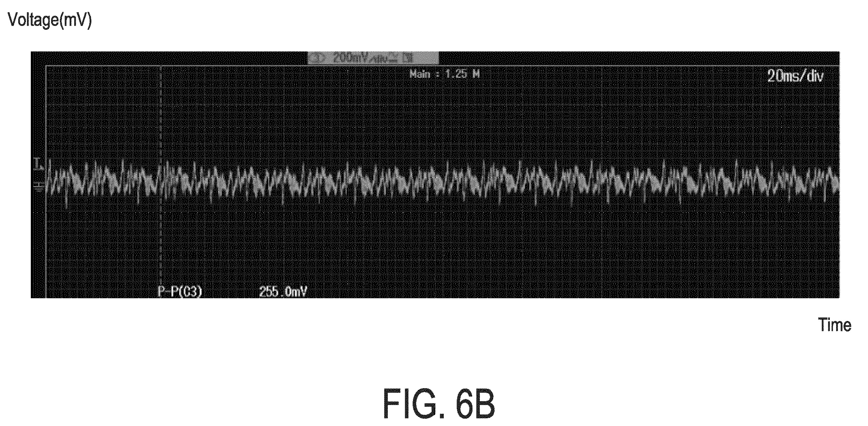

FIG. 6A is a schematic timing waveform diagram illustrating the simulation result of the LLC output voltage without using the ripple compensation circuit of the present invention. FIG. 6B is a schematic timing waveform diagram illustrating the simulation result of the LLC output voltage when using the ripple compensation circuit of the present invention. In case that the ripple compensation circuit 2 is not employed, the peak-to-peak value of the low frequency ripple in the LLC output voltage is about 469mV (see FIG. 6A). Whereas, in case that the ripple compensation circuit 2 is employed, the peak-to-peak value in the low frequency ripple of the LLC output voltage is about 259mV (see FIG. 6B). Obviously, the ripple compensation circuit 2 is capable of effectively suppressing the low frequency ripple.

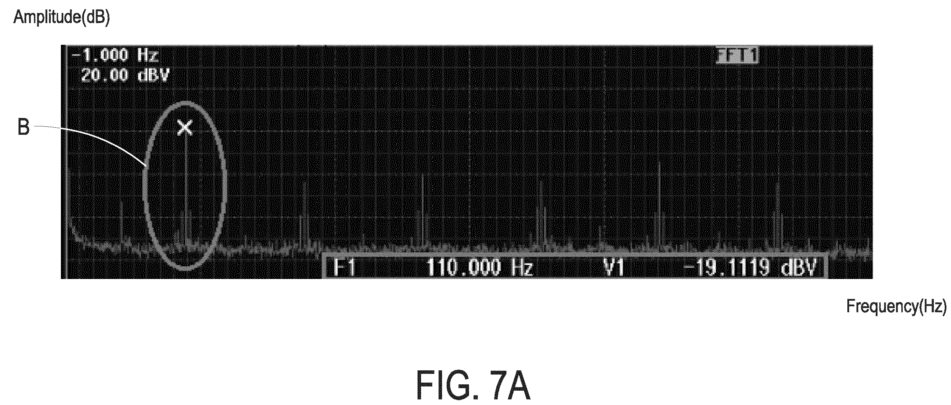

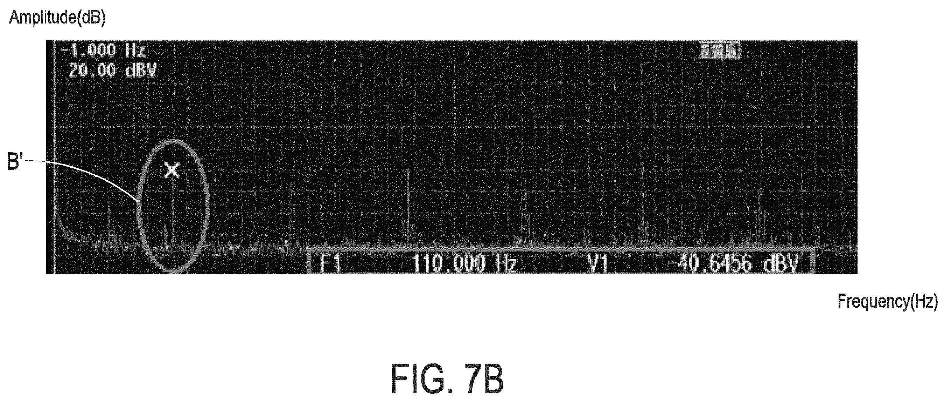

FIG. 7A is simulation result about the ripple amplitude spectrum of the LLC output voltage without using the ripple compensation circuit of the present invention. FIG. 7B is simulation result about the ripple amplitude spectrum of the LLC output voltage when using the ripple compensation circuit of the present invention. In case that the ripple compensation circuit 2 is not employed, the amplitude of the low frequency ripple in the LLC output voltage is about -19dB at 110Hz (see the circumscribed zone B of FIG. 7A). Whereas, in case that the ripple compensation circuit 2 is employed, the amplitude of the low frequency ripple in the LLC output voltage is decreased to -40.6dB at 110Hz (see the circumscribed zone B' of FIG. 7B). Obviously, the ripple compensation circuit 2 is capable of effectively suppressing the low frequency ripple.

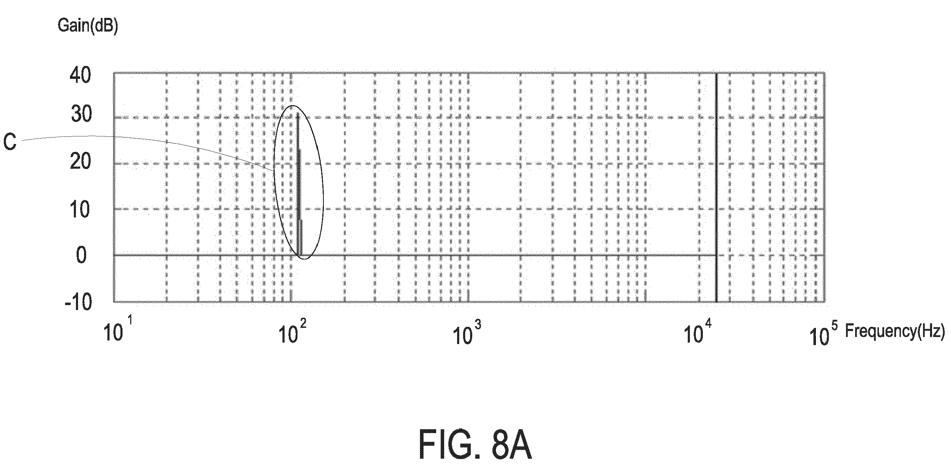

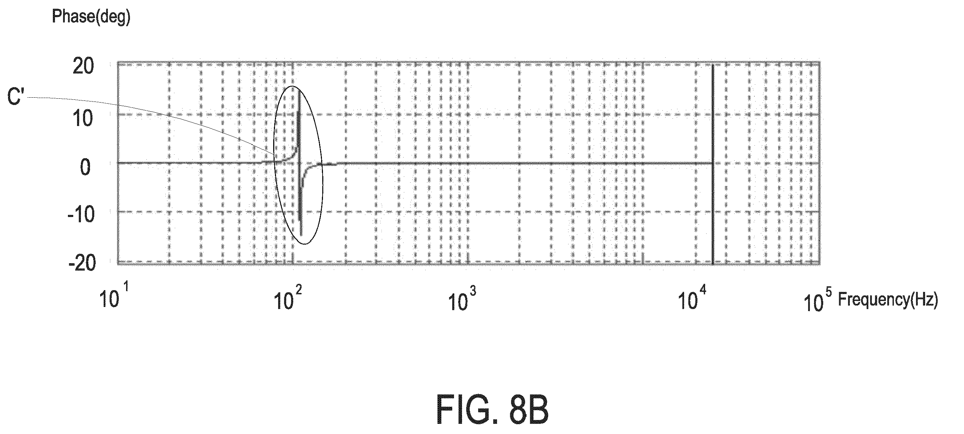

FIG. 8A is a plot illustrating the relationship between the gain value of the LLC input voltage and the frequency after compensated by the ripple compensation circuit of the present invention. FIG. 8B is a plot illustrating the relationship between the phase of the LLC input voltage and the frequency after compensated by the ripple compensation circuit of the present invention. Conventionally, the LLC output voltage and the gain value of a gain filter are multiplied to generate a modulated error signal and increase the gain value of the LLC output voltage at the low frequency, and the LLC input voltage is compensated by the modulated error signal to increase the gain value of the LLC input voltage at the low frequency. Consequently, a significant phase impact occurs. In accordance with the technology of the ripple compensation circuit 2 of the present invention, the gain of the first error signal Ve at low frequency is increased by the digital filter 22 so as to generate the second error signal Ve', then the first error signal Ve and the second error signal Ve' are added to generate the modulated error signal Vg, and finally the input voltage Vin of the LLC resonant converter 3 is compensated by the modulated error signal Vg. Consequently, the impact on the zero and pole locations will be minimized. In other words, after the input voltage Vin of the LLC resonant converter 3 is compensated by the modulated error signal Vg, the phase impact is reduced. Please refer to FIGS. 8A and 8B. After the input voltage Vin of the LLC resonant converter 3 is compensated by the modulated error signal Vg, the gain value of the input voltage Vin at the frequency of about 100Hz is increased (see the circumscribed zone C of FIG. 8A). Moreover, the circumscribed zone C' as shown in FIG. 8B indicates that the increase of the gain value results in a phase impact of about 15 degrees to about -15 degrees. In other words, the ripple compensation circuit 2 of the present invention can increase the low frequency gain while decreasing the phase impact. Consequently, the ripple compensation circuit 2 of the present invention can suppress the low frequency ripple and maintain the stability of the power supply 1.

In some embodiments, the ripple compensation circuit 2 is included in a microcontroller (not shown) of the power supply 1. The microcontroller is electrically connected with the LLC resonant converter 3 for controlling the LLC resonant converter 3. In case that the ripple compensation circuit 2 is included in the microcontroller, the compensating method can be implemented in a digital manner. Consequently, the low frequency gain of the LLC input voltage is compensated. Under this circumstance, the power supply 1 can directly suppress the low frequency ripple of the LLC input voltage with additional hardware components (e.g., a RC filtering circuit or an LC filtering circuit). Consequently, the inner space of the power supply 1 is saved, and the fabricating cost is reduced. As known, the storage space and the computation resource of the microcontroller are limited. Since the digital filter 22 is a simple but effective low-order filter such as an infinite impulse response filter, higher frequency selectivity is achievable with the lower order filter. Since the required storage space is very low, the use of the digital filter will not obviously consume the storage space and the computation resource of the microcontroller.

From the above descriptions, the present invention provides the ripple compensation circuit and the compensating method. In accordance with the technology of the ripple compensation circuit of the present invention, the gain of the first error signal at low frequency is increased by the digital filter so as to generate the second error signal, then the first error signal and the second error signal are added to generate the modulated error signal, and finally the input voltage of the LLC resonant converter is compensated by the modulated error signal. Consequently, the impact on the zero and pole locations will be minimized. After the input voltage of the LLC resonant converter is compensated by the modulated error signal, the phase impact is reduced. In other words, the ripple compensation circuit of the present invention can suppress the low frequency ripple and maintain the stability of the power supply.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

**Claims**

1.  A ripple compensation circuit (2) of a power supply (1), the power supply (1) comprising an LLC resonant converter (3), an input terminal of the LLC resonant converter (3) receiving an input voltage (Vin), an output terminal of the LLC resonant converter (3) generating an output voltage (Vout), the ripple compensation circuit (2) comprising:

    a subtracter (21), wherein an input terminal of the subtracter (21) is connected with the output terminal of the LLC resonant converter (3), and the subtracter (21) receives the output voltage (Vout) and a reference voltage (Vref), wherein after the output voltage (Vout) is subtracted from the reference voltage (Vref), the subtracter (21) outputs a first error signal (Ve);

a digital filter (22), wherein an input terminal of the digital filter (22) is connected with an output terminal of the subtracter (21) and receives the first error signal (Ve), wherein after the first error signal (Ve) is processed by the digital filter (22), a gain of the first error signal (Ve) at a low frequency is increased, so that a second error signal (Ve') is outputted from the digital filter (22);

an adder (23), wherein an input terminal of the adder (23) is connected with the output terminal of the subtracter (21) and an output terminal of the digital filter (22), wherein after the first error signal (Ve) and the second error signal (Ve') are added, a modulated error signal (Vg) is outputted from the adder (23); and

a voltage loop compensation circuit (24), wherein an input terminal of the voltage loop compensation circuit (24) is connected with an output terminal of the adder (23), and an output terminal of the voltage loop compensation circuit (24) is connected with the LLC resonant converter (3), wherein the voltage loop compensation circuit (24) generates a compensation signal (Sc) to control the LLC resonant converter (3) according to the modulated error signal (Vg), so that a low frequency gain of the input voltage (Vin) is increased and a low frequency ripple of the output voltage (Vout) is suppressed by an increased voltage loop compensator response.

2. The ripple compensation circuit (2) according to claim 1, wherein the power supply (1) further comprises a microcontroller, wherein the microcontroller is electrically connected with the LLC resonant converter (3) for controlling the LLC resonant converter (3).

3. The ripple compensation circuit (2) according to claim 2, wherein the ripple compensation circuit (2) is included in the microcontroller.

4. The ripple compensation circuit (2) according to any of the preceding claims, wherein the digital filter (22) is an infinite impulse response filter.

5. The ripple compensation circuit (2) according to claim 4, wherein the infinite impulse response filter has a z-domain transfer function for increasing the gain of the first error signal (Ve) at the low frequency, and the z-domain transfer function is expressed as:

$$\frac{b_1 \cdot z^{-1} + b_2 \cdot z^{-2}}{1 + a_1 \cdot z^{-1} + a_2 \cdot z^{-2}}$$

where, a1, a2, b1 and b2 are filter coefficients of the infinite impulse response filter, $z^{-1}$ is a first delay element, and $z^{-2}$ is a second delay element.

6. The ripple compensation circuit (2) according to any of the preceding claims, wherein the gain of the first error signal (Ve) at the low frequency to be increased by the digital filter (22) is a voltage gain at a frequency of 90Hz~120Hz.

7. A compensating method for a ripple compensation circuit (2) of a power supply (1), the power supply (1) comprising an LLC resonant converter (3), an input terminal of the LLC resonant converter (3) receiving an input voltage (Vin), an output terminal of the LLC resonant converter (3) generating an output voltage (Vout), the compensating method comprising steps of:

(a) subtracting the output voltage (Vout) from a reference voltage (Vref), so that a first error signal (Ve) is generated;
(b) providing a digital filter (22) to increase a gain of the first error signal (Ve) at a low frequency, so that a second error signal (Ve') is generated;
(c) adding the first error signal (Ve) and the second signal, so that a modulated error signal (Vg) is generated; and
(d) generating a compensation signal (Sc) to control the LLC resonant converter (3) according to the modulated error signal (Vg), so that a low frequency gain of the input voltage (Vin) is increased and a low frequency ripple of the output voltage (Vout) is inhibited.

8. The compensating method according to claim 7, wherein the digital filter (22) is an infinite impulse response filter.

9. The compensating method according to claim 8, wherein the infinite impulse response filter has a z-domain transfer function for increasing the gain of the first error signal (Ve) at the low frequency, and the z-domain transfer function is expressed as:

$$\frac{b_1 \cdot z^{-1} + b_2 \cdot z^{-2}}{1 + a_1 \cdot z^{-1} + a_2 \cdot z^{-2}}$$

where, a1, a2, b1 and b2 are filter coefficients of the infinite impulse response filter, $z^{-1}$ is a first delay element, and $z^{-2}$ is a second delay element.

10. The compensating method according to claim 7, wherein the gain of the first error signal (Ve) at the low frequency to be increased by the digital filter (22) is a voltage gain at a frequency of 90Hz~120Hz.

11. A power supply (1) comprising:

an LLC resonant converter (3), wherein an input terminal of the LLC resonant converter (3) receives an input voltage (Vin), and an output terminal of the LLC resonant converter (3) generates an output voltage (Vout); and
a ripple compensation circuit (2), particularly a ripple compensation circuit (2) as claimed in any of claims 1 to 6, said ripple compensation circuit (2) comprising:

a subtracter (21), wherein an input terminal of the subtracter (21) is connected with the output terminal of the LLC resonant converter (3), and the subtracter (21) receives the output voltage (Vout) and a reference voltage (Vref), wherein after the output voltage (Vout) is subtracted from the reference voltage (Vref), the subtracter (21) outputs a first error signal (Ve);
a digital filter (22), wherein an input terminal of the digital filter (22) is connected with an output terminal of the subtracter (21) and receives the first error signal (Ve), wherein after the first error signal (Ve) is processed by the digital filter (22), a gain of the first error signal (Ve) at a low frequency is increased, so that a second error signal (Ve') is outputted from the digital filter (22);
an adder (23), wherein an input terminal of the adder (23) is connected with the output terminal of the subtracter (21) and an output terminal of the digital filter (22), wherein after the first error signal (Ve) and the second error signal (Ve') are added, a modulated error signal (Vg) is outputted from the adder (23); and
a voltage loop compensation circuit (24), wherein an input terminal of the voltage loop compensation circuit (24) is connected with an output terminal of the adder (23), and an output terminal of the voltage loop compensation circuit (24) is connected with the LLC resonant converter (3), wherein the voltage loop compensation circuit (24) generates a compensation signal (Sc) to control the LLC resonant converter (3) according to the modulated error signal (Vg), so that a low frequency gain of the input voltage (Vin) is increased and a low frequency ripple of the output voltage (Vout) is suppressed by an increased voltage loop compensator response.

12. The power supply (1) according to claim 11, further comprising a microcontroller, wherein the microcontroller is electrically connected with the LLC resonant converter (3) for controlling the LLC resonant converter (3), wherein the ripple compensation circuit (2) is included in the microcontroller.

13. The power supply (1) according to claim 11 or 12, wherein the digital filter (22) is an infinite impulse response filter.

14. The power supply (1) according to claim 13, wherein the infinite impulse response filter has a z-domain transfer function for increasing the gain of the first error signal (Ve) at the low frequency, and the z-domain transfer function is expressed as:

$$\frac{b_1 \cdot z^{-1} + b_2 \cdot z^{-2}}{1 + a_1 \cdot z^{-1} + a_2 \cdot z^{-2}}$$

where, a1, a2, b1 and b2 are filter coefficients of the infinite impulse response filter, $z^{-1}$ is a first delay element, and $z^{-2}$ is a second delay element.

15. The power supply (1) according to any of claims 11 to 14, wherein the gain of the first error signal (Ve) at the low frequency to be increased by the digital filter (22) is a voltage gain at a frequency of 90Hz~120Hz.

FIG. 1A PRIOR ART

FIG. 1B PRIOR ART

FIG. 2

FIG. 3

Subtract the output voltage from a reference voltage, so that a first error signal is generated. — S1

Provide a digital filter to increase a low frequency gain of the first error signal, so that a second error signal is generated. — S2

Add the first error signal and the second signal, so that a gain signal is generated. — S3

Generate a compensation signal to the LLC resonant converter according to the gain signal, so that a low frequency gain of the input voltage is increased and a low frequency ripple of the output voltage is inhibited. — S4

# FIG. 4

FIG. 5A

Voltage(mV)

FIG. 5B

FIG. 5C

FIG. 6A

Voltage(mV)

P-P(C3)    255.0mV    Main : 1.25 M    20mS/div

FIG. 6B

Time

## FIG. 7A

Amplitude(dB)

−1.000 Hz
20.00 dBV

B

X

F1    110.000 Hz    Y1    −19.1119 dBV

FFT1

Frequency(Hz)

FIG. 7B

FIG. 8A

FIG. 8B

Phase(deg)

C'

**EP 3 258 582 A1**

Europäisches
Patentamt

European
Patent Office

Office européen
des brevets

## EUROPEAN SEARCH REPORT

Application Number

EP 16 17 4508

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU CHAOHUI ET AL: "Current ripple reduction in 4kW LLC resonant converter based battery charger for electric vehicles", 2015 IEEE ENERGY CONVERSION CONGRESS AND EXPOSITION (ECCE), IEEE, 20 September 2015 (2015-09-20), pages 6014-6021, XP032801439, DOI: 10.1109/ECCE.2015.7310503 [retrieved on 2015-10-27] * abstract * * Section II. Modelling of LLC Resonant Converter Section III. Control Design Section V. Experimental Verification; figures 1, 5-7 * | 1-15 | INV. H02M1/15 H02M3/335 ADD. H02M1/00 |
| | ----- | | |
| A | US 2007/210777 A1 (CERVERA PEDRO A [ES] ET AL) 13 September 2007 (2007-09-13) * abstract * * paragraphs [0008], [0009], [0042], [0057]; figures 2, 5 * | 1-15 | |
| | ----- | | TECHNICAL FIELDS SEARCHED (IPC) |
| A | US 2014/091720 A1 (BRINLEE ANTONY [US]) 3 April 2014 (2014-04-03) * abstract * * paragraphs [0033], [0034]; figure 13 * | 1-15 | H02M |
| | ----- | | |
| | -/-- | | |

The present search report has been drawn up for all claims

| Place of search | Date of completion of the search | Examiner |
|---|---|---|
| The Hague | 23 November 2016 | Van der Meer, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 16 17 4508

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TEODORESCU R ET AL: "Proportional-resonant controllers and filters for grid-connected voltage-source converters", IEE PROCEEDINGS: ELECTRIC POWER APPLICATIONS, INSTITUTION OF ELECTRICAL ENGINEERS, GB, vol. 153, no. 5, 1 September 2006 (2006-09-01), pages 750-762, XP006027268, ISSN: 1350-2352, DOI: 10.1049/IP-EPA:20060008 * abstract * * Section 3. Implementation of Resonant Controllers; figures 6, 7 * | 1-15 | |
| A | BUCCELLA CONCETTINA ET AL: "Observer-Based Control of LLC DC/DC Resonant Converter Using Extended Describing Functions", IEEE TRANSACTIONS ON POWER ELECTRONICS, INSTITUTE OF ELECTRICAL AND ELECTRONICS ENGINEERS, USA, vol. 30, no. 10, 1 October 2015 (2015-10-01), pages 5881-5891, XP011582434, ISSN: 0885-8993, DOI: 10.1109/TPEL.2014.2371137 [retrieved on 2015-05-22] * abstract * * figures 1, 14 * | 1-15 | TECHNICAL FIELDS SEARCHED (IPC) |

The present search report has been drawn up for all claims

| Place of search | Date of completion of the search | Examiner |
|---|---|---|
| The Hague | 23 November 2016 | Van der Meer, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 3 258 582 A1

## ANNEX TO THE EUROPEAN SEARCH REPORT
## ON EUROPEAN PATENT APPLICATION NO.

EP 16 17 4508

23-11-2016

| Patent document cited in search report | Publication date | Patent family member(s) | | Publication date |
|---|---|---|---|---|
| US 2007210777 A1 | 13-09-2007 | US | 2007210777 A1 | 13-09-2007 |
| | | US | 2009212751 A1 | 27-08-2009 |
| | | US | 2011316501 A1 | 29-12-2011 |
| | | US | 2014253058 A1 | 11-09-2014 |
| US 2014091720 A1 | 03-04-2014 | CN | 103716949 A | 09-04-2014 |
| | | DE | 102013106189 A1 | 03-04-2014 |
| | | US | 2014091720 A1 | 03-04-2014 |

EPO FORM P0459